# EUROPEAN PATENT APPLICATION

(11) **EP 1 178 693 A1**
(43) Date of publication of application: **06.02.2002**
(21) Application number: 00116746.9
(22) Date of filing: 03.08.2000
(51) Int. Cl.: H04Q 7/32, H04L 12/28

(54) **Method for accessing a cellular telecommunication network**

(71) Applicant: TELEFONAKTIEBOLAGET LM ERICSSON (publ), 126 25 Stockholm (SE)
(72) Inventor: Keller, Ralf, 52146 Wuerselen (DE); Lohmar, Thorsten, 52062 Aachen (DE)
(74) Representative: Mohsler, Gabriele

(57) **Abstract**

The invention relates to methods for enabling user equipment to access a cellular communication network, a method for accessing said network and user equipment granting said access.

The invention makes use of the idea that specially equipped user equipment with a second communication path can be used to enable further user equipment also having a second communication path to access a cellular communication network. The invention allows the introduction of master user equipment, controlling the access of further user equipment and enabling free of charge calls for further user equipment.

## Description

The present invention relates to a method for accessing, a method to support an access, and user equipment that enables further user equipment to access at least one cellular communication network.

Cellular communication networks are increasing rapidly in the number of subscribers and the number of services that are provided. A large part of the population is used to the services a cellular phone offers to them.

The acceptance of the cellular phone technology has increased to a point that the availability of mobile communication is taken for granted. This leads to the situation that areas without coverage for mobile communication are hardly accepted.

Due to the increasing number of mobile user equipment and the technical progress, the transmission power of user equipment has been reduced significantly. Early mobile phones had a transmission power of about 10 Watts, while modern cellular phones have a transmission power of about 0.5 Watt. If a signal sent with this low power is attenuated for example within a building or a vehicle, a communication can become impossible.

Increasing the transmission power leads to increasing interference problems within a cellular communication network.

One solution known to the public is the use of devices that enable user equipment to overcome physical restrictions when accessing a cellular communication network.

For example a vehicle holder for cellular phones provides user equipment with an external antenna like the HF6300 system from Ericsson. By this, signal attenuation, caused by the metal body of a vehicle, is avoided.

It is a shortcoming of the state of the art that devices, enabling user equipment to access a cellular communication network, do not support more than one user equipment.

It is an object of the invention to support more than one user equipment to access at least one cellular communication network.

This is solved advantageously by the methods of claim 1 and 2, and the user equipment of claim 8.

It is advantageous that the authentification of the user equipment is performed by using authentification information used in the cellular communication network to authentify a user of the respective user equipment. This allows the identification of the accessing user equipment by the cellular communication network.

It is further advantageous that the user equipment enabling further user equipment to access a cellular communication network comprises an authentification unit. This allows distinguishing calls to the user equipment enabling accesses from calls to further user equipment.

Further advantageous embodiments and implementations of the invention can be derived from the claims 3 to 7 and 9 to 14.

Especially advantageous is the monitoring of cellular communication networks according to claim 3. The monitoring enables user equipment to receive calls.

Further advantageous is the necessity of permission by master user equipment according to claim 4. This enables master user equipment to control the access of further user equipment to the cellular communication network.

Further advantageous is the use of Bluetooth™ devices as communication unit according to claim 11. Bluetooth™ is a low cost standard for wireless communication that is widely spread and well known in the telecommunication area.

The invention is based on the idea that specially equipped user equipment can be used to enable more than one further user equipment to access at least one cellular communication network.

One scenario is for example the use of mobile phones inside of vehicles. As most of the car bodies are made of metal, transmissions from inside a car are attenuated. The use of vehicle holders for mobile phones enables a single user to access a cellular communication network. If several users are staying within the same car, for example on a business trip or commuting, only one of them could make use of the vehicle holder.

Another scenario is to enable the access of user equipment to a cellular communication network both using a different frequency. For example an European subscriber, having a roaming agreement for a 1900 megacycles GSM network in the US but using a user equipment for 900 megacycles GSM, is enabled to access the US network.

The invention facilitates access for a plurality of users. With master user equipment, this access can be controlled by one of the users, an advantage especially for taxi drivers or chauffeurs. A taxi driver or chauffeur can decide whether a guest is permitted or not to access a cellular communication system via his/her user equipment.

In an embodiment of the invention, the user controlling the master user equipment can revoke permission granted to the user of a further user equipment. It is even possible for him/her to interrupt an ongoing call of the user of the further user equipment.

Cellular communication networks have to identify user equipment for example for charging purposes. To make sure that a user is permitted to access a certain network, the user identity is confirmed by an authentification process. Such an authentification can be performed for example by requirement of a code sequence a user has to enter into his/her equipment. The information can be stored within a user equipment for example in an authentification unit.

Master user equipment, whose authentification information is used for authentification, allows the user controlling the master user equipment, to offer users of further user equipment calls by using his authentification information. Actually, uses a user equipment, authentified with the authentification information of the master user equipment, the subscription of said master user equipment. This facilitates access for user who did not subscribe to the cellular communication system they want to access. A further advantage is the possibility to offer guests calls on the charge of the user of the master user equipment.

The invention is not restricted to the use within cars, it can be used for example in any area with reduced availability of cellular communication networks or places where it seems suitable to control the access to such networks.

In the following the invention will be further described by means of examples and by means of figures.

The following figures show:
- Fig. 1: depicts an example of user equipment, using a method to access and a method to enable access to a cellular communication network, according to the invention,
- Fig. 2: depicts an example of user equipment using a method to enable more than one user equipment to access a cellular communication network, according to the invention, and
- Fig. 3: depicts an example of user equipment using a further method to enable more than one user equipment to access a cellular communication network, according to the invention.

In the following, equal elements are marked by equal reference signs.

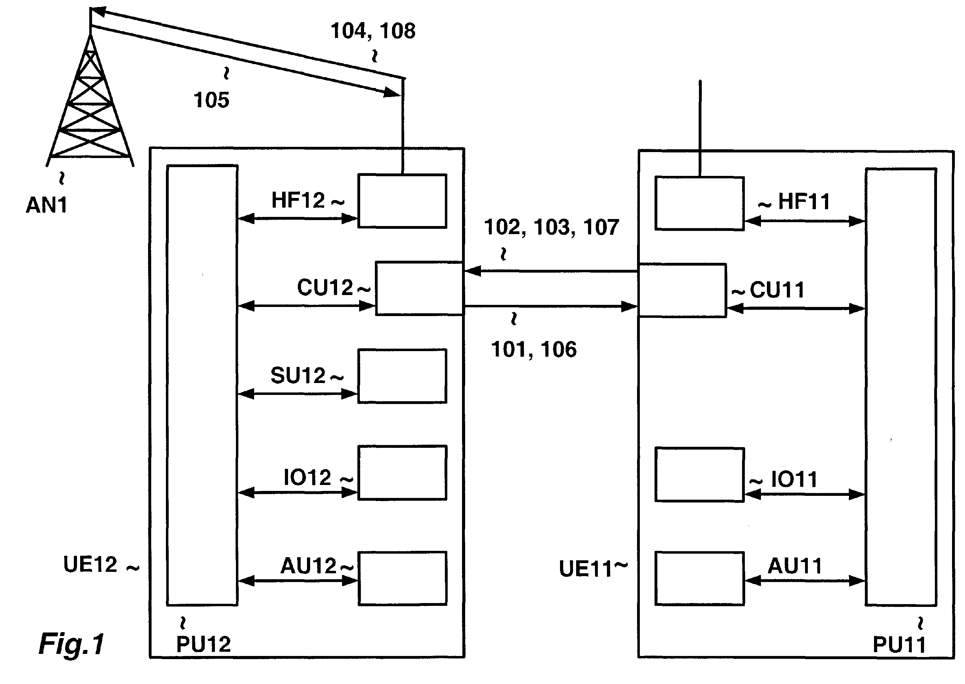

Figure 1 depicts an example of user equipment UE12 according to the invention, an access node AN1 of a cellular communication network and further user equipment UE11.
The user equipment UE12 comprises a high frequency unit HF12, a communication unit CU12, a storage SU12, an input/output unit IO12, and a processing unit PU12. The high frequency unit HF12 is used for communication with a cellular communication network, for example a GSM (Global System for Mobile communication), a UMTS (Universal Mobile Telecommunication System), a PDC (Personal Digital Communication system), a packet PDC, or a D-AMPS (Digital-Advanced Mobile Phone System) network.
In an embodiment of the invention, the user equipment UE12 comprises more than one high frequency unit HF12, facilitating more than one user equipment to communicate with a cellular communication network and/or to communicate with more than one cellular communication network, at the same time.

The communication unit CU12 is used for communication with further user equipment. It can be realised by any wireless communication means as for example an infrared, an ultrasonic or a radio transceiver, or by wireline communication means connected for example via a vehicle holder. In a preferred embodiment of the invention, the communication unit CU12 is a Bluetooth™ communication device. The storage SU12 is a memory used to store information about further user equipment. These information can be, for example, an identification of a further user equipment that identifies the user equipment in a cellular communication network, parameter describing connections to the cellular communication network, an identification and parameter for the connection between user equipment, or an information that a call forwarding is invoked for the further user equipment.
The I/O unit IO12 is an interface between a user and the user equipment. It can be realised for example by a display, a keyboard, a touch screen, a microphone and a loudspeaker, and by combinations of these.
The authentification unit AU12 is used for the authentification of a user. An example for an authentification unit is the SIM (Subscriber Identity Module) as known from GSM or UMTS networks.
It should be noted that the authentification unit AU12 is not mandatory. In an embodiment of the invention, a user equipment UE12 without an authentification unit can facilitate further user equipment to access a cellular communication network, for example if authentification information of a master user equipment or of further the user equipment is used.

The processing unit PU12 controls and co-ordinates the units of the user equipment. In an embodiment of the invention, the user equipment UE12 is incorporated in a car, a bus, a taxi or another vehicle or vessel.
In a further embodiment of the invention, the user equipment UE12 is placed in a vehicle holder.
The user equipment UE11 comprises a high frequency unit HF11, a communication unit CU11, an authentification unit AU11, a processing unit PU11 and an I/O unit IO11.
The high frequency unit HF11 is used for communication with a cellular communication network, for example a GSM, a UMTS, a PDC, a packet PDC, or a D-AMPS network.
The communication unit CU11 is a wireless or wireline communication device used to communicate with other user equipment.
The processing unit PU11 controls and co-ordinates the units of the user equipment. The interface unit IO11 can be realised as described for the I/O unit IO12. It is used for communication with a user.

In an embodiment of the invention, the second user equipment UE12 detects the user equipment UE11. This detection can be performed vice versa, too. The invention does not depend on a certain detection mechanism, it is designed to work with any detection mechanism known to a person skilled in the art. It depends on the embodiment of the communication unit CU12 and on the protocol used for communication among user equipment. A detection of user equipment can for example be performed by measuring field strengths, monitoring frequencies for a signal, measuring sound levels, or, in a simple way, by contacts in a vehicle holder.

The second user equipment UE12 contacts the user equipment UE11 by sending a contact message 101 via the communication unit CU12. The user equipment UE11 receives the contact message in its communication unit CU11 and establishes a connection in a next step 102.

In a further embodiment of the invention, the steps 101 and 102 are performed vice versa, the user equipment UE11 sending the contact message and the second user equipment UE12 establishing the connection.
Afterwards, the user equipment UE11 sends an access request message 103 to the second user equipment UE12. This access request comprises an identification of the user equipment UE11 that identifies the user equipment UE11 in a cellular communication system.
In a further embodiment of the invention, step 103 is performed at the establishment of the connection between the user equipment UE11 and UE12 for example the identification being included in message 101 or 102. In that case, the establishment of the connection between the user equipment is an implicit access request of the user equipment UE11.
The second user equipment UE12 receives the access request from the user equipment UE11 and stores the identification in its storage SU12. The storage of the identification can be performed after a permission of access by the cellular communication network, alternatively.
In a preferred embodiment of the invention, the user equipment UE12 checks, whether it is capable of handling the user equipment UE11. If not, it sends an access reject message to the user equipment UE11.
If it is capable of handling the user equipment UE11, it registers the user equipment UE11 in the cellular communication network by sending an access request message 104 to the access node AN1. An access request message is for example an attachment request or a location update request.
The registration of user equipment comprises those steps that are performed between user equipment and a communication network when an access is requested. The steps depend on the network the user equipment is registered to and can for example include the transmission of: user settings, device information, an identification of a subscription, an identification of a user equipment and an authentification of a user equipment or a user. In the following there is no difference made between subscription, user equipment and user in the respect of authentification, as for example in Japanese PDC networks a user equipment is authenticated while in European GSM networks and similar networks in the United States an authentification of a user is performed.
The cellular communication network returns an authentification request 105 in order to verify that the user is permitted to access said network.
The authentification request 105 is forwarded in a message 106 by the second user equipment UE12 to the user equipment UE11.
The user equipment UE11 gathers the requested authentification information from its authentification unit AU11.
The user equipment UE11 returns authentification information in a message 107 to the second user equipment UE12.
The second user equipment UE12 forwards this authentification information to the access node AN1 of the cellular communication network in a message 108.
If the authentification information verifies that the user equipment UE11 is permitted to access the cellular communication network, the access is established.
If not, the access is rejected by the cellular communication network. This rejection is sent to the second user equipment UE12. The second user equipment UE12 removes the identification of the user equipment UE11 in the cellular communication network, from the storage SU12, and forwards the reject message to the user equipment UE11.

In a preferred embodiment of the invention, the user equipment UE12 monitors the cellular communication network, whether the user equipment UE11 is paged or called. This can be performed, for example by the high frequency unit HF12, monitoring a broadcasting channel of the cellular communication network.

In an embodiment of the invention, the user equipment comprises more than one high frequency unit HF12 to allow the monitoring of a plurality of broadcasting channels of a plurality of cellular communication networks.

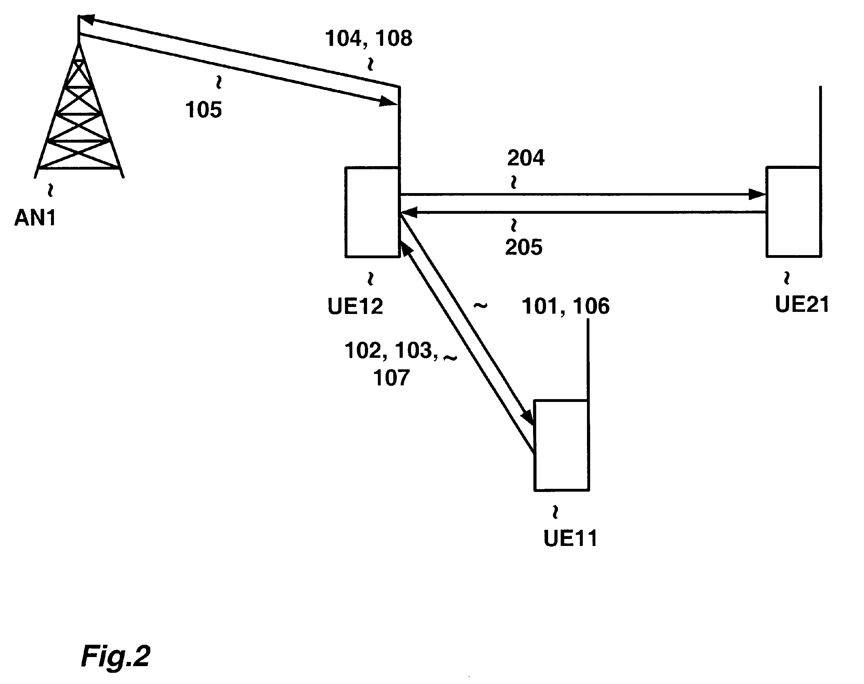

The second figure Fig.2 depicts a schematic of user equipment UE12, UE11, and UE21 and access node AN1 of a cellular communication network, the user equipment performing a method to enable more than one user equipment to access a cellular communication network. The first user equipment UE21 is master user equipment. It accesses the cellular communication network via the second user equipment UE12.
The further user equipment UE11 requests an access to the cellular communication network as described for figure 1.
After the reception of the access request message 103 and the storing of the information, the second user equipment UE12 checks whether the further user equipment UE11 is permitted to ask for an access by sending a permission request message 204 to the master user equipment UE21.
The master user equipment UE21 checks whether further user equipment UE11 is permitted to access the cellular communication network. This check can be performed for example by checking a look-up table or by signalling the request to the user of the master user equipment UE21 and an input by said user.
The master user equipment UE21 confirms the permission by returning a permission message 205.
The second user equipment UE12 continues as described in figure 1 with the registration of the further user equipment UE11 in the cellular communication network by sending the message 104 to the access node AN1. The preceding steps are the same as in the method described in figure 1.
In a further embodiment of the invention, the permission request 204 and the permission message 205 are sent between the further user equipment UE11 and the master user equipment UE21. In such an implementation, the further user equipment UE11 does not require an access in a message 103 before it receives a permission message 205.
In a preferred embodiment of the invention, the master user equipment UE21 can send an interruption request to terminate a connection between further user equipment UE11 and a cellular communication network. The interruption request may be sent to the second user equipment UE12 or to the further user equipment UE11, the receiver of the request terminating the connection.

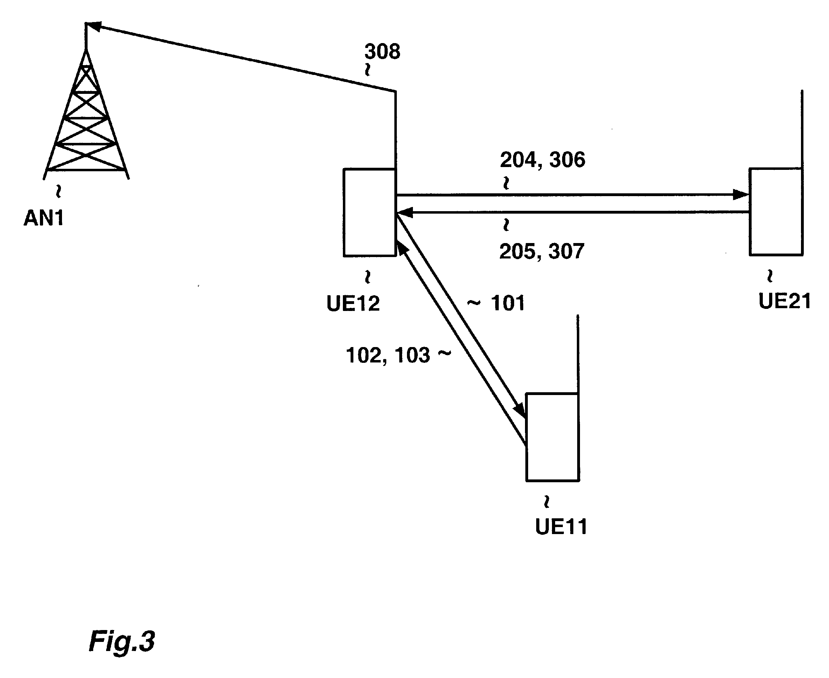

Figure 3 depicts a further schematic of three user equipment UE12, UE11, and UE21 and an access node AN1 of a cellular communication network performing a method to enable more than one user equipment to access a cellular communication network.
The further user equipment UE11 requests an access to the cellular network as described in figure 1, apart from the fact, that in this example no identification of the further user equipment UE11 is stored in the storage SU12 of the second user equipment UE12.
After the reception of the access request message, the second user equipment UE12 checks whether the further user equipment UE11 is permitted to ask for an access by sending a permission request message 204 to the master user equipment UE21.
The master user equipment UE21 confirms the permission by returning a permission message 205.
As the further user equipment UE11 is to access the cellular network by using the subscription of master user equipment UE21, the second user equipment UE12 sends a permission request 306 to master user equipment UE21. The master user equipment UE21 checks whether the further user equipment UE11 shall be permitted to use its subscription. This check can be performed for example by checking a look-up table or by signalling the request to the user of user equipment UE21 and an input by said user. If the permission is granted, the master user equipment UE21 returns a permission information 307.
In an embodiment of the invention, the permission requests 204 and 306 are sent in a single message. The permission information 205 and 307 are sent in a single message accordingly.
In a preferred embodiment of the invention, the further user equipment UE11 is enabled to receive incoming calls by an unconditional forwarding that is requested from the network. The call forwarding is activated by a call forwarding request message 308, sent from the second user equipment UE12 to the access node AN1. By an unconditional forwarding, all calls to the number of further user equipment UE11 are forwarded to the number of the master user equipment UE21.

In a further preferred embodiment, the second user equipment UE12 stores the information that call forwarding is activated for the further user equipment UE11. It offers to the further user equipment UE11 incoming calls for master user equipment UE21 that have been forwarded. All other incoming calls for master user equipment UE21 are offered to the master user equipment UE21. Forwarded calls can be recognised by information sent from a cellular communication network to a user equipment. They are often indicated to users of user equipment by a message on a display.

Without the call forwarding, the access given to the user equipment UE11 is only valid for outgoing calls.

As the cellular communication network identifies user equipment by its authentification information, the location of user equipment UE11 is not known in the cellular communication network.

In an embodiment of the invention, the user equipment UE12 comprises an indicator indicating which user equipment UE11 or UE21 is currently accessing the cellular communication network. This indication can be a message displayed by the I/O unit of the user equipment UE12.

In the following a taxi is used to show the use of the invention. Said taxi incorporates a user equipment UE12 built in by the manufacturer of the taxi. Such user equipment is built in for example for remote diagnosis or automatic emergency calls. The taxi driver uses user equipment UE21 for communication via a cellular communication system. User equipment UE21 is placed in a vehicle holder and uses the high frequency unit and external antenna of user equipment UE12 to communicate with said cellular communication system. In the example the cellular communication system is a GSM 900 MHz network.
A guest carrying user equipment UE11 takes said taxi. User equipment UE12 and UE21 are 900 MHz GSM mobile phones, user equipment UE11 is a D-AMPS mobile phone, each of the user equipment comprises two communication means according to the invention.
To access the GSM network, the guest has two different options. Firstly, he can use his own subscription if his operator has an agreement with the operator of the GSM network. Secondly, even if no such agreement exists, he can ask for the permission of the taxi driver to use his subscription to access the GSM network. In both alternatives the user equipment UE21 operates as master user equipment and user equipment UE12 as second user equipment. The guest can access the GSM network with the first user equipment UE11 via the second user equipment UE12. In the first alternative, the authentification information in user equipment UE11 is used for authentification, in the second alternative the information in user equipment UE21 is used for that purpose.
In the second alternative, a call forwarding from the subscriber number of the guest to the subscriber number of the taxi driver is activated, to enable the guest to receive incoming calls. User equipment UE12 offers all incoming calls that have been forwarded to user equipment UE11. Calls that not have been forwarded are offered to user equipment UE21. In both alternatives the taxi driver controls the access of the guest, being able to interrupt a connection between the user equipment UE11 and the cellular communication network, for example to set up a call himself/herself.

## Claims

1. A method for a first user equipment (UE11) to access a cellular communication network via a second user equipment (UE12) that has access to said cellular communication network, both user equipment comprising at least two communication means, the first communication means (HF11, HF12) for communication with said cellular communication network, the second communication means (CU11, CU12) for communication with the respective other user equipment, said method comprising the following steps performed by the first user equipment (UE11):
- sending an access request (103) for the cellular communication system to the second user equipment,
- receiving an authentification request (105) from the cellular communication network forwarded (106) by the second user equipment,
- sending an authentification information (107) to the cellular communication network via the second user equipment.

2. A method for a second user equipment (UE12) to enable at least one further user equipment (UE11) to access a cellular communication network, the user equipment comprising at least two communication means, the first communication means for communication with said cellular communication network, the second communication means for communication with the respective other user equipment, said method comprising the following steps performed by the second user equipment (UE12):
- receiving an access request (103) for the cellular communication network from the further user equipment,
- registering the further user equipment to the cellular communication network (104),
- receiving an authentification request (105) from the cellular communication network,
- forwarding (106) the authentification request to the further user equipment,
- receiving authentification information (107) from the further user equipment,
- forwarding (108) the authentification information to the cellular communication network.

3. A method, according to claim 2 with the additional steps of:
- storing an identification of the further user equipment, and
- monitoring at least one cellular communication network, whether said user equipment is paged or called.

4. A method according to any of the claims 2, or 3, wherein one of the user equipment is a master user equipment (UE21), the method comprising the additional steps of:
- sending a permission request (204) to the master user equipment, whether the further user equipment is allowed to access the cellular communication network,
- receiving a permission information (205) from the master user equipment.

5. A method according to claim 4, wherein the further user equipment (UE11) uses the subscription of the master user equipment (UE21), with the additional step of invoking a call forwarding (308) in the cellular network from the number of the further user equipment to the number of the master user equipment.

6. A method according to claim 4 or 5 with the additional steps of:
- receiving an connection interrupt request from the master user equipment,
- disconnecting the communication between the further user equipment and the cellular communication network.

7. A method according to claim 6 with the additional step of revoking the call forwarding in the cellular communication network.

8. A user equipment (UE12) for communicating in a cellular communication network comprising:
- a processing unit (PU12),
- at least one high frequency unit (HF12), facilitating at least one communication path to the cellular communication network,
- a communication unit (CU12), facilitating a communication path to at least one further user equipment,
- a storage (SU12) to store at least one user identification that identifies a user in the cellular communication system, and to store communication parameter describing a communication path between the user equipment and at least one further user equipment said communication path set up by using the communication unit, and
- an I/O unit (IO12) to signal information to and receive input from a user.

9. A user equipment according to claim 8, further comprising an authentification unit (AU12) for authentifying the user equipment.

10. A user equipment according to claim 8 or 9, further comprising an indicator for indicating which user equipment is currently authenticated.

11. A user equipment according to claim 8, 9 or 10, wherein the communication unit (CU12) is a Bluetooth™ transceiver.

12. A user equipment according to any of the claims 8 to 11, wherein the at least one high frequency unit (HF12) is a GSM (Global System for Mobile communication) transceiver.

13. A user equipment according to any of the claims 8 to 12, wherein the at least one high frequency unit (HF12) is a UMTS (Universal Mobile Telecommunication System) transceiver.

14. A user equipment according to any of the claims 8 to 13, that is incorporated in a vehicle.
